# EUROPÄISCHE PATENTANMELDUNG

(11) **EP 1 777 501 A1**
(43) Veröffentlichungstag der Anmeldung: **25.04.2007**
(21) Anmeldenummer: 05109868.9
(22) Anmeldetag: 24.10.2005
(51) Int. Cl.: G01D 5/14, G01D 5/16, G01D 3/08, F02D 41/22

(54) **Positionssensoranordnung zur berührungslosen Positionsbestimmung mittels redundanter magnetempfindlicher Sensorelemente**

(71) Anmelder: Getrag Ford Transmissions GmbH, 50735 Köln (DE)
(72) Erfinder: Kather, Lutz, 53909 Zülpich (DE)

(57) **Zusammenfassung**

Es wird ein Positionssensor für eine berührungslose Positionsbestimmung mittels redundanter magnetempfindlicher Sensorelemente mit einer Gebereinheit (10) und einer gegenüber der Gebereinheit innerhalb eines vorgegebenen Positions-Messbereichs relativbeweglichen Sensoreinheit beschrieben, insbesondere zur Anwendung als Drehwinkelsensor für die Positionserkennung eines Wahlhebels bei einem automatischen Getriebe für ein Kraftfahrzeug. Dabei weist die Gebereinheit (10) ring- oder ringsegmentförmig angeordnete permanentmagnetisierte Bereiche mit einer in Richtung der Relativbewegung alternierenden Polfolge auf, so dass sich für die Sensoreinheit ein inhomogener, alternierender Magnetfeldverlauf ergibt, wobei wenigstens zwei Polpaare vorgesehen sind. Dieser Feldverlauf wird durch wenigstens zwei Sensorelemente an unterschiedlichen Polen abgetastet. Dadurch, dass die von den einzelnen Polen ausgehenden Magnetfelder einen unterschiedlichen Nominalwinkel aufweisen, kann der Einfluss homogener Störfelder korrigiert werden. Ferner werden verschiedene Methoden zur Fehlerdiagnose und Korrektur bei einem derartigen Positionssensor beschrieben.

## Beschreibung

Die vorliegende Erfindung betrifft einen Positionssensor und eine Positionssensoranordnung zur berührungslosen Positionsbestimmung mittels redundanter magnetempfindlicher Sensorelemente gemäß dem Oberbegriff des Patentanspruches 1.

Eine derartige Anordnung kann insbesondere zur Erfassung des Fahrerwunsches bei einem automatischen Getriebe eines Kraftfahrzeuges mit einem "Shift-by-Wire"-System eingesetzt werden. Der Fahrerwunsch bestimmt das Funktionsverhalten des Getriebes. Die Fahrerwunscherfassung bei einem automatischen Getriebe umfasst typischerweise folgende Fahrstufenauswahl: Parken, Rückwärtsfahrt, Neutral und Vorwärtsfahrt. Optional ist die Vorwärtsfahrt in zwei oder mehr Stufen aufgeteilt. Die Erfassung des Fahrerwunsches bestimmt das Fahrverhalten des Fahrzeuges wesentlich und ist somit ausgesprochen sicherheitsrelevant. Deshalb ist eine sichere Erkennung zu gewährleisten bzw. muss ein evtl. Sensorfehler erkannt werden. In einigen Applikationen wird weiterhin für Einfachfehler eine Redundanz gefordert, die eingeschränkte Notlaufeigenschaften ermöglicht.

Konventionelle Automatikgetriebe gemäß dem Stand der Technik weisen parallel zu einer elektrischen Erfassung des Fahrerwunsches eine mechanische Verbindung zur hydraulischen Steuerung eines Wandlerautomaten auf. Die sensorische Erfassung und elektrische Steuerung zuzüglich der mechanischen Verriegelung stellen ein redundantes System dar, weshalb der elektronische Sensor im Fehlerfall nicht die Fahrsituation bestimmen kann. Bei derartigen automatischen Getrieben ist der elektronische Sensor für die Erfassung des Fahrerwunsches daher nicht im gleichen Maß als sicherheitskritisch einzustufen.

Bei einem "Shift-by-Wire"-System fehlt jedoch diese mechanische Verbindung zur Getriebesteuerung. Der Fahrerwunsch wird ausschließlich über elektronische Sensoren erfasst und die entsprechenden Aktionen werden vom Getriebesteuergerät aufgrund der Information vom Getriebewahlschalter (Transmission Range Sensor) mittels elektrischer Aktuatoren im Getriebe veranlasst. Eine alternative Form der Informationsübertragung, die eine Verriegelung im Fehlerfall ermöglichen würde, existiert hierbei nicht mehr. Somit erfordert die Fahrerwunscherfassung eine sehr hohe Zuverlässigkeit des elektronischen Sensorsystems.

Der Fahrerwunsch wird bei üblichen "Shift-by-Wire"-System von dem Wählhebel zunächst über einen Seilzug mechanisch übertragen. Die übermittelte Linearbewegung wird über einen Hebel in eine Drehbewegung umgewandelt. Die Drehbewegung weist entsprechende Rastpositionen auf, die jeweils den entsprechenden Fahrstufen entsprechen. Eine Positionssensoranordnung ist dahingehend ausgebildet, diesen Drehwinkel zu erfassen. Insbesondere im Bereich der Rastpositionen wird eine gute Detektion gefordert.

Die sensorische Erfassung des Drehwinkels wird auf vielfältige Weise gelöst. Für robuste Systeme, die unter hohem Kostendruck stehen, haben sich im Automobilbereich magnetische Konzepte durchgesetzt. Diese weisen in der Regel einen rotatorisch gelagerten magnetischen Geber mit einer stationären Erfassung des Magnetfeldes auf. Der Geber ist meist als Permanentmagnet ausgebildet. Im Rahmen eines Sensorausleseverfahrens wird eine charakteristische Komponente des Magnetfeldes gemessen, welche in einem definierten Zusammenhang zur Messgröße, dem Drehwinkel, steht. Der Vorteil dieser Messmethode liegt darin, dass diese berührungslos arbeitet, so dass Probleme aufgrund von Kontaktkorrosion oder -abnutzung von vornherein vermieden werden. Ein Nachteil liegt allerdings darin, dass derartige Sensoren prinzipiell störanfällig gegenüber externen magnetischen Feldern sind.

Aus dem Stand der Technik sind Systeme bekannt, die einen Geber mit einem homogenen Magnetfeld und einer Sensoreinheit aufweisen, der ein vom Winkel der Magnetfeldlinien abhängiges Signal ausgibt. Diese Systeme lassen sich durch eine Duplizierung der Sensoreinheit zu redundanten Systemen erweitern. Ein Nachteil der Systeme, die nur sensorseitig eine Redundanz aufweisen, ist eine Störanfälligkeit gegenüber magnetischen Einflüssen, die zum Beispiel durch stromführende Leitungen erzeugt werden, da eine Winkeländerung des magnetischen Feldes aufgrund einer Überlagerung durch eine Störung nicht von einer tatsächlichen Winkeländerung des Gebers unterschieden werden kann. Mit einem weiteren Magnetgeber, dessen Feldlinien gegenüber dem ersten Magnetgeber vorzugsweise um 90° versetzt sind und der mit diesem gekoppelt ist, ist es grundsätzlich möglich, eine tatsächliche Winkeländerung von einer Winkeländerung aufgrund magnetischer Störungen zu unterscheiden. Um die Anforderungen an die Zuverlässigkeit und eine Einfach-Redundanz zu erfüllen, sind bei diesem Konzept drei Sensoreinheiten und drei Gebereinheiten, d.h. Magnete, erforderlich. Dies führt zu einer inakzeptablen Baugröße. Nachteilig ist weiterhin, dass die weiteren Messebenen aufgrund der räumlichen Entfernung zwischen den Messebenen nicht zwingend mit dem gleichen Störvektor beaufschlagt sind, was die Erkennung und Korrektur gegenüber Störfeldern erschwert.

Aus der DE 199 56 361 C2 ist ein Drehwinkelsensor zur Drehwinkeldetektion in einem homogenen Magnetfeld bekannt. Obwohl bei diesem Sensor die Anordnung redundanter Magnetsensoren vorgeschlagen wird, ist es aufgrund des homogenen Feldverlaufs prinzipbedingt nicht möglich, Störfelder unter allen Bedingungen zuverlässig zu erkennen und deren Einfluss zu minimieren.

Vor diesem Hintergrund besteht die Aufgabe der vorliegenden Erfindung darin, einen Positionssensor bzw. eine Positionssensoranordnung auf der Basis magnetempfindlicher Sensoren zu schaffen, der bzw. die in einer kompakten Bauform mit nur einer Magnetebene und mit möglichst geringem Aufwand eine maximale Zuverlässigkeit gegenüber Defekten und externen Störsignalen sowie eine Diagnosefähigkeit und - falls erforderlich - auch eine Redundanz bereitstellt, so dass die hohen Anforderungen bei einem "Shift-by-Wire"-System erfüllt werden.

Die Lösung der vorgenannten Aufgabe erfolgt durch einen Positionssensor mit den Merkmalen des Patentanspruches 1 bzw. durch eine Positionssensoranordnung mit den Merkmalen des Patentanspruches 6.

Vorteilhafte Ausgestaltungen der Erfindung sind in den Unteransprüchen beschrieben.

Der erfindungsgemäße Positionssensor bzw. die Positionssensoranordnung eignen sich insbesondere zur Erfassung von Drehbewegungen, wenngleich auch Linearbewegungen erfasst werden können. Der Sensor bzw. die Sensoranordnung ist besonders gut für Anwendungsfälle geeignet, bei denen Schwenkbewegungen über einen begrenzten Winkelbereich zuverlässig erfasst werden sollen. Typische Anwendungsbereiche sind - neben der vorstehend erläuterten Schalthebelpositionserkennung bei einem automatischen Getriebe - die Erkennung der Pedalstellung bei einem elektronischen Gaspedal oder der Stellung eines elektronisch betätigten Bremspedals oder einer elektronisch betätigten Drosselklappe. Der erfindungsgemäße Positionssensor ist auch für Anwendungsbereiche geeignet, bei denen eine kontinuierliche Rotationsbewegung detektiert werden soll. In diesem Falle sind ggf. zusätzliche Sensorelemente erforderlich, mit denen eine Eindeutigkeit des detektierten Positionssignals gewährleistet werden kann, da ein Positionssensor gemäß der vorliegenden Erfindung eine eindeutige Winkelzuordnung nur in einem Messbereich von maximal 180° ermöglicht. Der erfindungsgemäße Sensor eignet sich ferner besonders gut zur Erkennung diskreter Schaltpositionen, ist jedoch auch zur Erkennung kontinuierlicher Positionen - z.B. der vorstehend erwähnten Gas- und Bremspedalstellungen - geeignet.

Der erfindungsgemäße Positionssensor besteht aus einer Sensoreinheit und einer Gebereinheit. Die Sensoreinheit weist mindestens zwei magnetfeldempfindliche Sensorelemente auf. Einfache Hallsensoren erfassen typischerweise lediglich eine skalare Komponente des magnetischen Flussdichtevektors in einer durch die Sensorpositionierung vorgegeben Richtung. Im Rahmen der Erfindung werden bevorzugt Sensorelemente eingesetzt, die den Vektor (d.h. die Richtung und den Betrag) der magnetischen Feldlinien erfassen, wenngleich auch der Einsatz "skalarer" Magnetfeldsensoren oder von Sensoren zur alleinigen Erfassung des Magnetfeldwinkels möglich ist. Besonders geeignet sind GMX- oder AMX-Sensoren sowie 2-D und 3-D messende Hallzellen. Derartige mehrdimensional messende Sensorelemente können im Rahmen der Erfindung selbstverständlich auch aus benachbart angeordneten Einzelsensoren (z.B. zwei orthogonal angeordneten Hallzellen für einen 2-D-Hallsensor) in diskreter Bauweise aufgebaut werden.

Vorzugsweise kommen im Rahmen der Erfindung Sensoren zum Einsatz, auf denen bereits eine Vorverarbeitung der Signale stattfindet. Die Vorverarbeitung bezieht sich sowohl auf die signaltechnischen Anpassungen wie Verstärkung und Filterung sowie komplexere Rechenalgorithmen.

Die Gebereinheit besteht im Rahmen der Erfindung aus einem zumindest bereichsweise magnetisierten Element, welches mit der zu sensierenden Vorrichtung mechanisch gekoppelt ist, wobei die Gebereinheit vorzugsweise rotatorisch gegenüber der vorzugsweise feststehenden Sensoreinheit bewegt wird (selbstverständlich ist es auch möglich, die Sensoreinheit gegenüber der feststehenden Gebereinheit zu bewegen, was jedoch unter dem Aspekt der Signalleitungszuführung in der Regel weniger günstig ist).

Die rotatorische Ausführungsform besteht aus einer magnetisierten, vorzugsweise kreisringförmigen Gebereinheit mit *N* Polpaaren, wobei *N* ≥ 2. Innerhalb des Magnetrings ergibt sich ein alternierender Magnetfeldverlauf mit stark inhomogenen Feldlinien. Der Vektor der Feldlinien ist abhängig vom Messort innerhalb des Magnetringes, wobei sich die Magnetfeldrichtung entlang des Innenumfangs in einem Bereich ausgehend von einem Pol bis zum jeweils übernächsten Pol mit gleicher Polarität um insgesamt 360° dreht. Diese Drehung des Magnetfeldes verläuft in der Regel nichtlinear mit dem jeweils betrachteten Umfangswinkel; jedoch kann aus der Magnetfeldrichtung innerhalb des vorgenannten 360°-Bereichs bei Kenntnis der Magnetfeldgeometrie eindeutig auf die jeweilige Winkelstellung zurück geschlossen werden. Aus diesem Grunde beträgt der Messbereich im Rahmen der vorliegenden Erfindung 360° dividiert durch die Anzahl der Polpaare.

Über diesen Messbereich hinaus ist das Signal der Magnetfeldsensorelemente nicht mehr eindeutig und muss durch zusätzliche Sensorsignale ergänzt werden.

Ein Aspekt der vorliegenden Erfindung (wenngleich ein erfindungsgemäßer Positionssensor grundsätzlich auch mit einem einzigen Magnetfeldsensor realisiert werden könnte, der in einem inhomogenen Magnetfeld bewegt wird) besteht darin, dass wenigstens zwei Sensorelemente vorhanden sind, wodurch die gewünschte Redundanz erzielt wird, wobei an der Gebereinheit mindestens so viele Polpaare vorhanden sind wie Sensorelemente vorhanden sind. Dabei sind die Magnetfeldsensoren derart angeordnet, dass diese jeweils im Wesentlichen im Einflussbereich der Magnetfelder jeweils verschiedener Pole der Gebereinheit angeordnet sind.

Das erfindungsgemäße Merkmal, wonach die Sensorelemente jeweils im magnetischen Einflussbereich verschiedener Pole angeordnet sind, wirkt mit dem erfindungsgemäßen Merkmal zusammen, wonach die Polbereiche ring- oder ringsegmentförmig angeordnet sind. Hierdurch wird nämlich bewirkt, dass die Feldlinien eines ersten Pols, die von einem ersten Sensor erfasst werden, aufgrund der Krümmung des Ringes nicht parallel zu den Feldlinien eines zweiten Pols sind, die von einem zweiten Sensor erfasst werden, nachfolgend als unterschiedliche "Nominalrichtung" bezeichnet.

Ein magnetisches Störfeld, das von einer - im Vergleich zu den Ausmaßen des Positionssensors - weit entfernten Störquelle stammt, ist in der Regel als näherungsweise homogen anzusehen. Ein derartiges, näherungsweise homogenes Störfeld wirkt sich mit unterschiedlichen Richtungsbeiträgen auf die von den einzelnen Sensorelementen gemessenen Magnetfeldvektoren aus. Der aus dem Störfeld resultierende Verschiebungsvektor der Magnetfeldvektoren kann daher in relativ einfacher Weise berechnet werden, so dass eine quantitative Korrektur möglich ist, was bei parallelen Nominalvektoren nicht ohne weiteres möglich wäre.

Wenn im Rahmen der Erfindung vorgeschlagen wird, dass jedes Sensorelement einem dezidierten Pol zugeordnet sein soll, so soll dies nicht ausschließen, dass auch noch zusätzliche Sensorelemente vorgesehen sind, die zusammen mit den "dezidierten" Sensorelementen im Bereich eines einzigen Pols angeordnet sind.

Vorzugsweise entspricht die Anzahl der Polpaare der Anzahl der Sensorelemente. Für Anwendungen mit besonders kleinem Messbereich sind Varianten mit mehr Polpaaren als Sensoren sinnvoll einzusetzen, damit der Messbereich (360° / Anzahl Polpaare) feiner aufgelöst werden kann. Neben einer symmetrischen Anordnung der Polpaare (d.h. Nord- und Südpole nehmen jeweils den gleichen Winkelbereich ein), können in einer alternativen Ausgestaltung auch unsymmetrische Polpaare vorgesehen sein, wobei dann der sinnvolle Messbereich kleiner als 360° dividiert durch die Anzahl *N* der Polpaare ist. Die Eindeutigkeit ist zwar im Rahmen von 360° / N gegeben, doch ist in den Randbereichen der Funktion mit einer geringeren Sensitivität zu rechnen.

Die Platzierung der Sensoren erfolgt derart, dass jeder Sensor einen anderen Flussvektor erfasst. Vorzugsweise ist eine Platzierung zu wählen, bei der sich die Winkel der Flussvektoren zwischen den Sensoren größtmöglich unterscheiden, damit Störfelder möglichst gut kompensiert werden können. Die Sensorelemente erfassen dabei jeweils einen Vektor, der abhängig von der individuellen Sensorposition und der Lage der Gebereinheit ist. Eine Drehwinkeländerung der Gebereinheit bewirkt bei allen Sensoren eine Änderung des Feldvektors. Sofern die Gebereinheit rotationssymmetrisch gegenüber einer Rotation um einen Winkel 360°/*N* ausgestaltet ist und die Sensorelemente in Winkelabständen von ebenfalls 360° / *N* entlang des Umfangs angeordnet sind, ergibt sich bei einer Drehbewegung für jedes Sensorelement näherungsweise dieselbe Flussvektordrehung. In dieser Konstellation ist jeder Gruppe von zwei aufeinander folgenden Polen ein Sensorelement zugeordnet.

Bei einer Anordnung der Sensorelemente in dem vorstehend genannten Raster kommt es, wenn die Anzahl der Polpaare mit der Anzahl der Sensorelemente übereinstimmt zu einer äquidistanten Anordnung der Sensorelemente entlang eines Vollkreises (Winkelabstand z.B. 120° bei drei Sensorelementen und drei Polpaaren). Da häufig angestrebt wird, die Sensorelemente auf einer möglichst kleinen Fläche zu konzentrieren, um die Fläche der erforderlichen elektronischen Platine als Träger der Sensorelemente zu minimieren und die Montage zu vereinfachen, kann in einer vorteilhaften Ausgestaltung der Erfindung der vorstehende Winkelabstand auch halbiert werden, d.h. auf 180°/ *N*. Hierdurch wird es möglich, die Sensorelemente auf eine Hälfte des Ringes zu konzentrieren. Bei einer rotationssymmetrisch ausgebildeten Gebereinheit mit identisch ausgebildeten Nordund Südpolen führen die vorstehend genannten "halben" Schritte dazu, dass der entsprechende Sensor gegenüber dem benachbarten Sensorelement ein entsprechend phasenverschobenes Signal erfasst.

Jedes der Sensorelemente weist prinzipiell eine vorgegebene Referenzachse auf, gegenüber der jeweils die Messung der Magnetfeldrichtung erfolgt. Um sensorbedingte Fehler (z.B. durch Ausfall oder Verschlechterung des Sensors in einer Achsrichtung) möglichst gut erkennen zu können, ist in einer bevorzugten Ausführungsform der Erfindung vorgesehen, dass die Winkelorientierung der Referenzachse wenigstens eines Sensorelements von der Winkelorientierung der Referenzachse wenigstens eines anderen Sensorelements abweicht, wobei vorzugsweise sämtliche Referenzachsen unterschiedlich orientiert sind.

Alternativ oder zusätzlich kann durch die Positionierung der Sensorelemente und deren Winkelposition vorgegeben werden, dass diese über den gesamten vorgegebenen Messbereich stets betragsmäßig unterschiedliche Ausgangssignale erzeugen. In dieser vorteilhaften Anordnung weisen alle Sensoren unterschiedliche Signale auf, die alle dem gleichen Drehwinkel zugeordnet werden. Bei einer Änderung des Drehwinkels erfahren alle Sensorsignale eine Änderung. Die neuen Signale können wiederum alle dem gleichen Drehwinkel zugeordnet werden.

Da sich die Sensorausgangssignale über den Messbereich im Allgemeinen nicht linear mit der Winkelposition zwischen Geber- und Sensoreinheit verändern, kann es in einer alternativen Ausführungsform der Erfindung auch sinnvoll sein, die Sensoren gegenüber den vorstehend genannten 180° / *N*-Positionen versetzt anzuordnen, so dass die Änderungsrate der Ausgangssignale der Sensorelemente bei einer Relativrotation zwischen Geber- und Sensoreinheit für die einzelnen Sensorelemente jeweils unterschiedlich ist. Durch die geringere Änderungsrate bei einzelnen Sensoren kann die Genauigkeit der Winkelbestimmung verbessert werden.

Die Zuordnung der Sensorsignale zu einem Drehwinkel erfolgt durch eine Positionssensoranordnung mit einem erfindungsgemäßen Positionssensor und einer zugehörigen Auswerteeinheit. Dabei ist der mathematische Zusammenhang zwischen Winkelposition und Sensorausgangssignalen durch die Magnetgeometrie näherungsweise vorgegeben.

Die Systemgenauigkeit kann jedoch in einer bevorzugten Ausgestaltung der Erfindung durch Einlernen bestimmter Referenzpunkte verbessert werden. Bei Anwendung des erfindungsgemäßen Sensors im Rahmen einer Schalthebelanordnung werden vorzugsweise die Schalthebel-Rastpositionen eingelernt.

Bei einer Applikation des Positionssensors bei einem System ohne Rastpunkte kann der Sensor mit einer beliebigen Zahl von Referenzpunkten eingelernt werden. Die Kalibrierungswerte werden vorzugsweise in der Sensoreinheit abgelegt. Bei Applikationen, bei denen der Sensor Bestandteil einer intelligenten programmierbaren Steuerung ist, werden die Kalibrierungswerte vorzugsweise in der Steuerung abgelegt.

Die Detektion von mehreren Magnetfeldvektoren unterschiedlichen Nominalwinkels ermöglicht weiterhin die Erkennung und Quantifizierung von Störungen.

Zur Korrektur von Störungen sind mindestens zwei Sensorelemente erforderlich. In einer einfachen Ausführungsform werden die jeweiligen Signale jeweils einem Drehwinkel zugeordnet. Falls sich diese Drehwinkel um mehr als die zulässige Toleranz unterscheiden, liegt entweder ein Störfeld vor oder mindestens ein Sensor ist defekt. Bei dieser einfachen Störungs- und Fehlerdetektion ist bei Erkennung einer Störung oder eines Fehlers die Zuverlässigkeit der Information nicht mehr gegeben.

Eine weitere Möglichkeit besteht darin, den Störungsvektor zu berechnen. Mit der Kenntnis des Störvektors kann dieser von den gemessenen realen Magnetfeldvektoren subtrahiert werden. Damit erhält man die unverschobenen Vektoren, die dann jeweils einem bestimmten Drehwinkel zugeordnet werden können. Bei dieser Korrektur kann zwischen einem Störfeld und einem defekten Sensor unterschieden werden: Liegt ein Störfeld vor, so zeigen die korrigierten Vektoren alle auf den gleichen Drehwinkel. Im Falle einer defekten Zelle liegt dagegen der Vektor auch nach der Korrektur weiterhin außerhalb des zulässigen Toleranzbereichs. Die Sensorelemente, die vor der Korrektur einen vergleichbaren Drehwinkel sensiert haben, sind intakt; die abweichende Zelle ist defekt.

Eine weitere Diagnosemöglichkeit besteht darin, die Flussdichte, d.h. den gemessenen Betrag des Magnetfeldvektors, über den jeweils gemessenen Magnetfeldwinkel für jedes Sensorelement individuell einzulernen. Da für die Drehwinkelbestimmung im Rahmen der Erfindung bereits die Magnetfeldrichtung ausreicht, stellt die von den Sensorelementen bestimmte lokale magnetische Flussdichte eine zusätzliche Information dar, die zur Plausibilitätsprüfung herangezogen werden kann. Unter Berücksichtigung der Toleranzen wird ein Streuband abgelegt. Fällt die gemessene Flussdichte für einen bestimmten gemessenen Magnetfeldwinkel aus dem Streuband, so liegt eine Störung vor. Vorzugsweise wird diese Funktion zentral oder dezentral in der Sensoreinheit abgelegt und bei der Paarung der Sensoreinheit mit der Gebereinheit eingelernt. Derartige eingelernte Sensoreinheiten können bereits in einer Konfiguration mit zwei Sensoren auch nach Ausfall eines Sensors Störungen korrigieren, indem das Signal des unplausibel erscheinenden Sensors verworfen wird.

Systeme mit weitergehender Redundanz können durch Hinzufügen nur eines weiteren Sensorelements aufgebaut werden (eine Duplizierung beider Sensorelemente ist nicht erforderlich). Die drei Sensorelemente werden vorzugsweise in einem Winkel von 120° auf dem Sensorradius zueinander angeordnet. In diesem Fall ist auch bei Ausfall eines Sensors eine Korrektur möglich. Durch die Anordnung in einem 120°-Raster und dem damit verbundenen kleineren Messbereich ist eine höhere Genauigkeit der Sensoren erforderlich. Eine Möglichkeit, auf eine höhere Genauigkeitsanforderung verzichten zu können, besteht darin, die Information des eingelernten Nominalverlaufs (Flussdichte über Winkel) mit einzubeziehen. Im Fehlerfall ist die Abweichung der Signale der funktionstüchtigen Sensoren zum eingelernten Nominalverlauf eine wesentliche Information bei der Korrektur.

Falls die integrierte Signalverarbeitungsschaltung eines Sensorelements bereits eine Diagnosemöglichkeit implementiert hat, kann ein entsprechendes Diagnosesignal selbstverständlich herangezogen werden.

Eine alternative Fehlererkennung für die Sensorelemente kann durch die Detektion "eingefrorener" Signale bei Winkeländerung erfolgen. Hierbei kann die klassische Zwei-aus-Drei-Auswertung zum Einsatz kommen. Ändert sich ein erstes Signal und zwei weitere Signale bleiben konstant, so ist dies ein Hinweis darauf, dass dieses eine Signal zukünftig als ungültig anzusehen ist. Ändern sich zwei Signale und eines bleibt konstant, ist das konstante Signal als defekt anzusehen.

Das Grundkonzept des vorstehend beschriebenen Drehwinkelsensors lässt sich ebenso auf eine lineare Ausführungsform übertragen. In dieser Ausführungsform ist die Magnetgeometrie derart ausgebildet, dass die Winkeländerung im Verlauf einer linearen Positionsänderung auftritt, wobei der Magnetgeber eine Linearbewegung ausführt. Die Geometrie des Magneten ist so ausgestaltet, dass sich entlang der Bewegungsrichtung eine Winkeländerung der Feldlinien ergibt. In dieser Ausführungsform werden die Sensoreinheiten analog zur rotatorischen Ausführung so angeordnet und orientiert, dass jeder Sensor einen anderen Winkel detektiert.

Für andere sicherheitskritische Applikationen - wie z.B. ein elektronisches Gaspedal ("E-Gas") oder einem Drosselklappensensor mit einem Messbereich ≤ 90° - wird bevorzugt eine Ausführungsform der Erfindung mit vier Polpaaren und zwei Sensorelementen eingesetzt, sofern die Redundanzanforderungen für den Fehlerfall nicht mehr Sensorelemente erforderlich machen. Mit zwei Sensorelementen in einer Anordnung mit senkrecht zueinander verlaufenden Feldlinien ist sowohl eine Störfelderkennung als auch eine Sensorfehlererkennung möglich. Eine Optimierung durch Einlernen der Flussdichte über den Winkel kann ebenfalls angewandt werden, um die Zuverlässigkeit weiter zu steigern. Bei einem Sensorfehler wäre ein Notlauf mit einem reduzierten Motormoment denkbar, um die Sicherheit zu gewährleisten.

Die Erfindung wird nachfolgend anhand der Zeichnungen beispielhaft näher erläutert. Es zeigen:
- Figuren 1 a-e: verschiedene schematische Ansichten eines erfindungsgemäßen Positionssensors mit drei Sensorelementen;
- Figur 2: eine Ansicht, aus der ein Beispiel für die Orientierung der Referenzachsen der einzelnen Sensorelemente deutlich wird;
- Figuren 3a-c: Ansichten zur Erläuterung eines erfindungsgemäßen Korrekturverfahrens; und
- Figuren 4a,b: schematische Ansichten von zwei weiteren Ausführungsformen des erfindungsgemäßen Positionssensors.

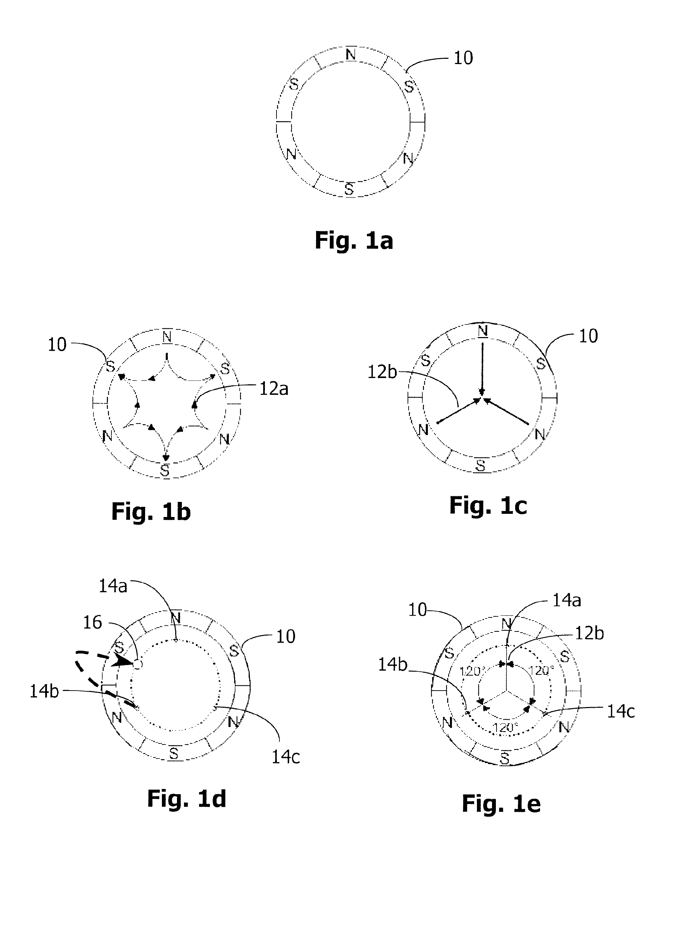

Figur 1a zeigt eine ringförmige Magnetgebereinheit 10 mit symmetrisch angeordneten, jeweils gleich groß ausgebildeten Nord- und Südpolen, die jeweils einen Winkel von 60° einnehmen. Auch wenn die Magnetgebereinheit 10 in Figur 1a als vollständig durchmagnetisierter Ring dargestellt ist, kann diese auch beispielsweise als Flächengebilde aus einem magnetisierbaren Werkstoff mit entsprechend magnetisierten ringförmigen Bereichen ausgebildet sein (nicht dargestellt).

In Figur 1b ist der Feldlinienverlauf 12a für die der von der Mitte der drei Südpole des Ringmagneten 10 ausgehenden Feldlinien dargestellt; in Figur 1c ist der entsprechende Feldlinienverlauf 12b für die Nordpole dargestellt. Wie ersichtlich, handelt es sich um ein stark inhomogenes Feld, wobei sich in der Nähe des Innenumfangs des Ringmagneten 10 die Feldlinienrichtung über einen Winkelbereich von 120° (d.h. über zwei Pole) jeweils um 360 ändert.

Dieser Feldlinienverlauf wird vorzugsweise mit einer Sensoreinrichtung, wie sie in Figur 1d schematisch dargestellt ist, detektiert. Dazu sind Sensorelemente 14a,b,c auf einem Kreis zentrisch zur Rotationsachse (die durch das Zentrum des Ringmagneten senkrecht zur Papierebene verläuft) angeordnet. Der Winkel zwischen den Sensorelementen 14a,b,c ist vorzugsweise in gleich große Abschnitte von 120° aufgeteilt, vgl. auch Figur 1e. Bei einer Relativbewegung zwischen Geberund Sensoreinheit ist der Drehwinkel der Flussvektoren jeweils um den Faktor drei größer als der Drehwinkel des Magnetgebers.

In einer alternativen Ausführungsform ist auch eine Unterbringung aller Sensorelemente innerhalb eines Winkelbereiches von 180° bei symmetrischen Magnetgebern möglich. Zu diesem Zweck können die Sensoren auch in 60°-Schritten verschoben werden, wie in Figur 1d am Beispiel des Sensorelements 16 (anstelle des Sensorelements 14b) gezeigt, wobei der entsprechende Sensor dann ein entsprechend verschobenes Feldlinienmuster detektiert.

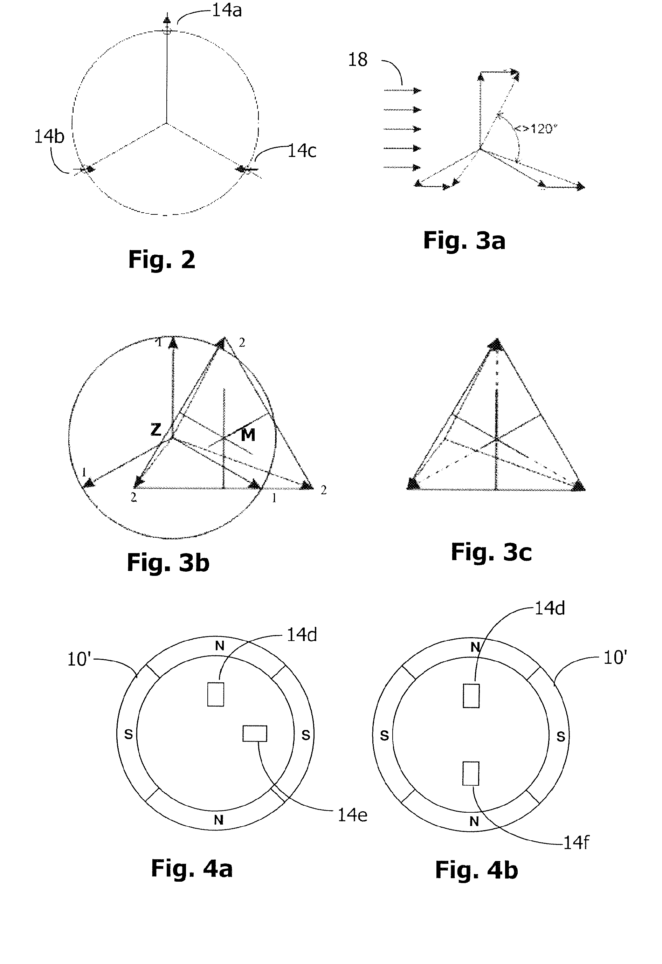

Werden die Sensoren relativ zum Nominalvektor in gleicher Winkelorientierung angeordnet, ist der Winkel der Flusslinien bei allen Sensorelementen gleich. In einer vorzugsweisen Ausgestaltung wird, wie in Figur 2 dargestellt, die Orientierung der Sensoren 14a,b,c relativ zum jeweiligen Nominalvektor unterschiedlich gewählt, so dass systematische Fehler der Sensorelemente zuverlässiger ermittelt werden.

In den Figuren 3a-c wird der Einfluss eines externen homogenen Störfeldes auf die Messsignale bei einer Positionssensoranordnung mit drei Sensorelementen näher erläutert. Gemäß Figur 3a wirkt sich ein überlagertes homogenes Störfeld 18 dergestalt aus, dass die Nominalvektoren alle eine unterschiedliche Winkeländerung erfahren. Weiterhin ist zu erkennen, dass der skalare Wert der Vektoren gegenüber dem Nominalwert abweicht. Auch sind die Vektoren nicht mehr gleich lang. Beide Indizien können zur Störungserkennung genutzt werden.

In den Figuren 3b und 3c wird das vektorielle Korrekturverfahren anschaulich dargestellt: In Figur 3b sind die drei Nominalvektoren 1 vom Mittelpunkt Z des Kreises zum äußeren Radius dargestellt. Die Vektoren mit beaufschlagter Störung 2 spannen ein Dreieck auf. Die Verschiebung des Mittelpunktes M des Dreiecks zum Kreismittelpunkt Z entspricht dem Störvektor. Zur Korrektur kann der Störvektor abgezogen werden oder zum neuen Mittelpunkt jeweils ein Ersatzvektor berechnet werden. In Figur 3c werden die korrigierten Vektoren gezeigt, die vom Endpunkt der gestörten Vektoren zum neuen Mittelpunkt definiert sind.

Eine weitere bevorzugte Ausführungsform für Applikationen mit Störungskompensation aber geringeren Redundanzanforderungen zeigen die Figuren 4a und 4b, bei denen jeweils eine Gebereinheit 10' mit zwei Polpaaren vorgesehen ist. In der Ausgestaltung gemäß Figur 4a sind die Feldlinien für die im 90°-Abstand angeordneten Sensorelemente 14d, 14e orthogonal zueinander ausgerichtet. In der Ausgestaltung gemäß Figur 4b mit Sensorelementen 14d, 14f in einem Winkelabstand von 180° sind die von den Sensorelementen erfassten Feldlinien gegeneinander ausgerichtet. In beiden Ausführungen bewirkt eine Drehbewegung bei jeweils beiden Sensorelementen eine Signaländerung, die einem gleichen Drehwinkel zugeordnet werden kann. Überlagerte Störungen verursachen Signaländerungen, die zu ungleichen Drehwinkelzuordnungen führen.

## Patentansprüche

1. Positionssensor für eine berührungslose Positionsbestimmung mittels redundanter magnetempfindlicher Sensorelemente, mit
einer Gebereinheit (10) und einer gegenüber der Gebereinheit innerhalb eines vorgegebenen Positions-Messbereichs relativbeweglichen Sensoreinheit,
**dadurch gekennzeichnet,**
**dass** die Gebereinheit (10) ring- oder ringsegmentförmig angeordnete, permanentmagnetisierte Bereiche mit einer in Richtung der Relativbewegung alternierenden Polfolge aufweist, so dass sich für die Sensoreinheit ein inhomogener, alternierender Magnetfeldverlauf ergibt,
**dass** die Sensoreinheit wenigstens zwei magnetempfindliche Sensorelemente (14a-f) aufweist, die jeweils ein oder mehrere elektrische Ausgangssignale wenigstens abhängig von der jeweiligen lokalen Magnetfeldrichtung erzeugen, und die an jeweils unterschiedlichen Stellen der Oberfläche der Gebereinheit (10) benachbart angeordnet sind, wobei der vorgegebene Messbereich und die Polfolge der Gebereinheit derart abgestimmt sind, dass jedes Sensorelement (14a-f) bei einer Relativbewegung zwischen Geber- und Sensoreinheit über den gesamten vorgegebenen Messbereich eine Änderung der Magnetfeldrichtung von maximal 360° erfährt, so dass jedes Sensorelement (14a-f) über den vorgegebenen Messbereich ein der aktuellen Relativposition zwischen Geber- und Sensoreinheit eindeutig zuzuordnendes Ausgangssignal liefert, und
**dass** die Anzahl *N* der Polpaare auf der Gebereinheit (10) wenigstens der Anzahl der Sensorelemente (14a-f) entspricht, wobei jedes Sensorelement im magnetischen Einflussbereich eines anderen Pols der Gebereinheit (10) angeordnet ist.

2. Positionssensor nach Anspruch 1,
**dadurch gekennzeichnet, dass**
dieser als Drehwinkelsensor ausgebildet ist, wobei die Gebereinheit (10) als Ringmagnet mit einer Polpaar-Anzahl *N* von wenigstens zwei ausgebildet ist, und wobei der vorgegebene Messbereich ein Winkelmessbereich kleiner oder gleich 360 /N ist.

3. Positionssensor nach Anspruch 2,
**dadurch gekennzeichnet, dass**
das Magnetfeld der Gebereinheit (10) rotationssymmetrisch bezüglich einer Rotation um einen Winkel 360 /N ausgebildet ist, und dass die Sensorelemente (14a-f) jeweils an Winkelpositionen entlang des Innen- oder Außenumfangs des Ringmagneten angeordnet sind, die um einen Winkel von etwa 360° / *N* oder um einen Winkel von etwa 180 /*N* gegeneinander versetzt sind, wobei im letzteren Falle sämtliche Sensorelemente (14a-f) vorzugsweise innerhalb eines Winkelbereichs von insgesamt 180° angeordnet sind.

4. Positionssensor nach mindestens einem der Ansprüche 1 bis 3,
**dadurch gekennzeichnet, dass**
jedes der Sensorelemente (14a-f) jeweils eine vorgegebene Referenzachse aufweist, gegenüber der jeweils die Messung der Magnetfeldrichtung erfolgt, wobei die Winkelorientierung der Referenzachse wenigstens eines Sensorelements von der Winkelorientierung der Referenzachse wenigstens eines anderen Sensorelements abweicht, wobei vorzugsweise sämtliche Referenzachsen unterschiedlich orientiert sind, und/oder dass die Referenzachsen sämtlicher Sensorelemente (14a-f) derart orientiert sind, dass diese über den gesamtem vorgegebenen Messbereich stets betragsmäßig unterschiedliche Ausgangssignale erzeugen.

5. Positionssensor nach mindestens einem der Ansprüche 1 bis 4,
**dadurch gekennzeichnet, dass**
die Sensorelemente (14a-f) ganz oder teilweise sowohl zur Messung des Betrages als auch der Richtung des jeweiligen lokalen Magnetfeldvektors ausgebildet sind.

6. Positionssensoranordnung mit einem Positionssensor nach mindestens einem der Ansprüche 1 bis 5 sowie mit einer Auswerteeinheit, die mit dem Positionssensor in Verbindung steht,
**dadurch gekennzeichnet, dass**
die Auswerteeinheit dahingehend ausgebildet ist, die Relativposition zwischen Sensor- und Gebereinheit aus den Sensorausgangssignalen zu berechnen und ein Plausibilitätssignal für die Ausgangssignale zu ermitteln und/oder ein als fehlerhaft erkanntes Ausgangssignal eines Sensorelementes (14a-f) anhand der Ausgangssignale der übrigen Sensorelemente zu korrigieren.

7. Positionssensoranordnung nach Anspruch 6,
**dadurch gekennzeichnet, dass**
die Auswerteeinheit dahingehend ausgebildet ist, aus den Ausgangssignalen der einzelnen Sensorelemente (14a-f) jeweils sensorspezifische Relativpositionen anhand eines gespeicherten funktionellen Zusammenhangs zu berechnen, die aus den einzelnen Sensorelementen abgeleiteten Relativpositionen zu vergleichen und bei Abweichungen, die einen vorgegebenen Schwellenwert überschreiten, die Relativposition als nicht plausibel zu deklarieren.

8. Positionssensoranordnung nach Anspruch 6 oder 7 mit einem Positionssensor nach Anspruch 5,
**dadurch gekennzeichnet, dass**
die Auswerteeinheit dahingehend ausgebildet ist, anhand der von den einzelnen Sensorelementen (14a-f) gemessenen Magnetfeldvektoren einen geometrischen Mittelpunkt (M) zu berechnen, einen Differenzvektor zwischen dem berechneten Mittelpunkt und der Lage des tatsächlichen Mittelpunkts der Sensoranordnung (Z) zu berechnen und die einzelnen Magnetfeldvektoren jeweils um diesen Differenzvektor zu korrigieren.

9. Positionssensoranordnung nach mindestens einem der Ansprüche 6 bis 8,
**dadurch gekennzeichnet, dass**
der Auswerteeinheit ein Festwertspeicher zugeordnet ist, und dass die Auswerteeinheit dahingehend ausgebildet ist, in einer Lernphase für ein oder mehrere vorgegebene Relativpositionen und für jedes Sensorelement (14a-f) den jeweils gemessenen Betrag des Magnetfeldvektors und die zugehörige gemessene Magnetfeldrichtung als zusammengehörigen Datensatz abzuspeichern, und in einer Betriebsphase aus den gemessenen Magnetfeldrichtungen der einzelnen Sensorelemente jeweils einen Schätzwert für den erwarteten Betrag des Magnetfeldvektors zu bestimmen, und bei einer hinreichend großen Abweichung zwischen dem Schätzwert und dem Messwert den entsprechenden Sensorausgangswert als unplausibel zu verwerfen.

10. Positionssensoranordnung nach mindestens einem der Ansprüche 6 bis 9,
**dadurch gekennzeichnet, dass**
der Positionssensor drei Sensorelemente (14a-c) aufweist, und dass dann, wenn die aus den Ausgangssignalen von zwei Sensorelementen bestimmten Relativpositionen im Rahmen der vorgegebenen Messgenauigkeit übereinstimmen und das Ausgangssignal des dritten Sensorelements nicht plausibel erscheint, das Ausgangssignal des dritten Sensorelements bei der Bestimmung der Relativposition unberücksichtigt bleibt.
